# EUROPÄISCHE PATENTSCHRIFT

(11) **EP 4 090 532 B1**
(45) Veröffentlichungstag und Bekanntmachung des Hinweises auf die Patenterteilung: **13.12.2023**
(21) Anmeldenummer: 21700490.2
(22) Anmeldetag: 07.01.2021
(51) Int. Cl.: B32B 17/10, H01Q 1/12, B60R 21/00, G01S 13/00, G08B 21/04

(54) **VERBUNDSCHEIBE FÜR EIN FAHRZEUG MIT INTEGRIERTEM RADARSENSOR**
LAMINATED GLASS PANE FOR VEHICLE WITH INTEGRATED RADAR SENSOR
VITRE COMPOSITE POUR UN VÉHICULE COMPRENANT UN CAPTEUR RADAR INTÉGRÉ

(30) Priorität: 15.01.2020 EP 20151969
(43) Veröffentlichungstag der Anmeldung: 23.11.2022
(73) Patentinhaber: Saint-Gobain Glass France, 92400 Courbevoie (FR)
(72) Erfinder: GILLESSEN, Stephan, 52477 Alsdorf (DE); KLEIN, Marcel, 52499 Baesweiler (DE); SCHULZ, Valentin, 52382 Niederzier (DE); BESLER, Robert, 52134 Herzogenrath (DE)
(74) Vertreter: Gebauer, Dieter Edmund
(86) Internationale Anmeldenummer: PCT/EP2021/050148
(87) Internationale Veröffentlichungsnummer: WO 2021/144180

(56) Entgegenhaltungen:
- CN-A- 109 050 457
- CN-U- 208 232 991
- JP-A- 2002 148 331
- JP-A- 2018 202 921
- US-A1- 2014 233 240

## Beschreibung

Die Erfindung betrifft eine Verbundscheibe für ein Fahrzeug mit integriertem Radarsensor sowie ein Verfahren zur deren Herstellung und ihre Verwendung.

Moderne Fahrzeuge werden heute auf höchstmögliche Effizienz und optimale Insassensicherheit entwickelt und werden mit einer Vielzahl von Fahrerassistenzsystemen ausgerüstet. Hierzu zählen zum Beispiel Regensensoren, Tageslichtsensoren, Gegenlichtsensoren, Ultraschallsensoren, optische Kameras und Radarsensoren. Sie dienen in aller Regel der Verkehrsüberwachung und können beispielsweise Straßenschilder erkennen oder die Position und die Geschwindigkeit von Objekten außerhalb des Fahrzeugs, wie andere Verkehrsteilnehmer oder auf der Fahrbahn befindliche Hindernisse, erkennen. Derzeit werden zu diesem Zweck vorwiegend optische Kameras oder Radarsysteme eingesetzt.

Für die Überwachung des Fahrzeuginnenraums werden derzeit meist Kamerasysteme, wie beispielsweise Infrarotkamerasysteme, beispielsweise für die Fahrerüberwachung, Gestenerkennung und für die Müdigkeitserkennung eingesetzt. Das Gesichtsfeld einer Person, beispielsweise des Fahrers kann durch eine Kamera gesucht und überwacht werden. Aus den aufgenommenen Bildern kann der Bereich der Augen (Auge auf/ zu) separiert und ausgewertet werden. Aus der Häufigkeit des Lidschlusses können Rückschlüsse zum Müdigkeitszustand gezogen werden. Optische Sensorsysteme sind aber in der Regel in ihrer Funktion und Datenqualität stark von Umwelteinflüssen und Umgebungshelligkeit abhängig, Kamerasysteme müssen zudem exakt ausgerichtet sein und brauchen einen freien "Blick" auf den Erfassungsbereich. Mit einer Kamera können grundsätzlich Personen und ihre Position im Fahrzeuginnenraum erkannt und bestimmt werden. Ein Kind in einem Kindersitz, welches mit einem Tuch gegen die Sonne geschützt werden soll, kann durch die Abdeckung gegebenenfalls aber nicht erkannt werden. Mit Infrarotkameras ist es möglich, Personen von Gegenständen im Fahrzeuginnenraum, beispielsweise also ein Kind in einem Kindersitz und einen leeren Kindersitz zu unterscheiden.

Werden Kinder oder Tiere bei Sonnenschein in einem verschlossenen Fahrzeug zurückgelassen, können durch Überhitzung sehr schnell kritische Gesundheitszustände oder gar Tod eintreten. Allein in den USA sind im Jahr 2018 über 50 in Autos zurückgelassene Kinder durch Überhitzung gestorben. Infrarotkameras, die bisher zur Überwachung eingesetzt werden, werden aber gerade durch Sonneneinstrahlung und durch aufgeheizte Innenräume in ihrer Bild und Datenqualität stark negativ beeinflusst, so dass hier unter Umständen keine zuverlässige Überwachung und Auswertung der aufgenommenen Daten geliefert werden kann. Zudem ist der Rechenaufwand in der Auswertung der Daten sehr hoch.

CN 109050457 A offenbart eine Scheibe für ein Fahrzeug zur Abtrennung eines Fahrzeuginnenraums für Insassen von einer äußeren Umgebung, wobei an der Scheibe ein Radarsensor angeordnet ist, sodass der Radarsensor Radarstrahlen in den Fahrzeuginnenraum strahlt und reflektierte Radarstrahlen aufnimmt und der Radarsensor mit einer Auswerteeinheit zur Ermittlung von Bewegung und/oder Präsenz von Personen im Fahrzeuginnenraum verbunden ist. CN 208 232 991 U, JP 2018 202921 A und JP 2002 148331 A offenbaren jeweils Fahrzeuge mit einem Sensor zur Ermittlung von Präsenz von Personen im Fahrzeuginnenraum. US 2014/233240A1 offenbart eine Verbundscheibe mit einem Funktionselement (lichtbrechendes Element).

Aufgabe der Erfindung ist es daher, eine Verbundscheibe für ein Fahrzeug mit einer verbesserten Sicherheitsfunktion für den Fahrzeuginnenraum und darin befindliche Personen bereitzustellen, die zudem kostengünstig und einfach herstellbar ist.

Diese und weitere Aufgaben werden nach dem Vorschlag der Erfindung durch eine Verbundscheibe gemäß dem unabhängigen Patentanspruch gelöst. Vorteilhafte Ausgestaltungen der Erfindung ergeben sich aus den Unteransprüchen.

Die Erfindung betrifft eine Verbundscheibe für ein Fahrzeug mit einer Außenscheibe und einer Innenscheibe, die über eine thermoplastische Zwischenschicht miteinander verbunden sind, wobei die Verbundscheibe zur Abtrennung eines Fahrzeuginnenraums für Insassen von einer äußeren Umgebung vorgesehen ist, und wobei in der thermoplastischen Zwischenschicht mindestens ein Radarsensor integriert und derart ausgebildet und angeordnet ist, dass der Radarsensor, Radarstrahlen in den Fahrzeuginnenraum strahlt und reflektierte Radarstrahlen aufnimmt und der Radarsensor mit einer Auswerteeinheit zur Ermittlung von Bewegung und/oder Präsenz von Personen oder Tieren im Fahrzeuginnenraum verbunden ist.

Die Integration mindestens eines Radarsensors in eine erfindungsgemäße Verbundscheibe ermöglicht vorteilhafterweise eine zuverlässige Überwachung des Fahrzeuginnenraums, beziehungsweise von Personen und/oder Tieren im Fahrzeuginnenraum bereitzustellen. Vorteilhafterweise ist der Radarsensor, beziehungsweise die Ermittlung der Radardaten, auch bei Dunkelheit oder großer Sonneneinstrahlung und Hitze zuverlässig möglich. Zusätzlich können auch mit Textilien überdeckte Personen und Tiere und deren Bewegungen problemlos erfasst und überwacht werden. Der Radarsensor ist in die thermoplastische Zwischenschicht integriert und so durch diese eingekapselt, befestigt und vor Umwelteinflüssen geschützt. Vorteilhafterweise können die Radarsignale Glas und Kunststoffe durchdringen und sind auch unempfindlich gegenüber Vibrationen. Die Auswertung der aufgenommenen Daten erfolgt durch die mit dem Radarsensor verbundene Auswerteeinheit.

Als Außenscheibe und Innenscheibe sind im Grunde alle elektrisch isolierenden Substrate geeignet, die unter den Bedingungen der Herstellung und der Verwendung der erfindungsgemäßen Verbundscheibe thermisch und chemisch stabil sowie dimensionsstabil sind.

Die Begriffe "Außenscheibe" und "Innenscheibe" sind lediglich zur Unterscheidung der beiden Scheiben einer erfindungsgemäßen Verbundscheibe gewählt. Mit den Begriffen ist keine Aussage über die geometrische Anordnung verbunden. Ist die erfindungsgemäße Verbundscheibe beispielsweise dafür vorgesehen, in einer Öffnung, beispielsweise eines Fahrzeugs oder eines Gebäudes, den Innenraum gegenüber der äußeren Umgebung abzutrennen, so ist die Außenscheibe in der Regel der äußeren Umgebung zugewandt, wohingegen die Innenscheibe dem Innenraum zugewandt ist.

Die Scheiben enthalten bevorzugt Glas, besonders bevorzugt Flachglas, ganz besonders bevorzugt Floatglas, wie Kalk-Natron-Glas, Borosilikatglas oder Quarzglas, oder bestehen daraus. Alternativ können die Scheiben klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon enthalten oder daraus bestehen. Die Scheiben sind bevorzugt transparent, insbesondere für die Verwendung der Scheiben als Windschutzscheibe oder Rückscheiben eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Scheiben, die nicht im verkehrsrelevanten Sichtfeld des Fahrers liegen, beispielsweise Dachscheiben, kann die Transmission aber auch viel geringer sein, beispielsweise größer als 5 %.

Die Dicke der Scheiben kann breit variieren und so den Erfordernissen des Einzelfalls angepasst werden. Vorzugsweise werden Standardstärken der einzelnen Scheiben von 1,0 mm bis 25 mm, beispielsweise von 1,1 mm bis 2,0 mm, bevorzugt von 1,4 mm bis 2,5 mm, beispielsweise 1,6 mm oder 2,1 für Fahrzeugglas verwendet. Die Größe der Scheiben kann breit variieren und richtet sich nach der Größe der erfindungsgemäßen Verwendung. Die erste Scheibe und zweite Scheibe weisen beispielsweise im Fahrzeugbau übliche Flächen von 200 cm² bis zu 20 m² auf.

In einer Ausführungsform der erfindungsgemäßen Verbundscheibe ist die thermoplastische Zwischenschicht aus einer oder mehreren thermoplastischen Folien ausgebildet. Die thermoplastische Zwischenschicht enthält bevorzugt Polyvinylbutyral (PVB), Ethylenvinylacetat (EVA), Akustik-PVB, Infrarotstrahlung (IR)-reflektierendes PVB, Polyethylen und/oder Polyurethan oder besteht hieraus. Die genannten Materialien haben sich als besonders geeignet in der Herstellung von Verbundscheiben erwiesen. Die Dicke jeder thermoplastischen Folie beträgt bevorzugt von 0,2 mm bis 2 mm, besonders bevorzugt von 0,3 mm bis 1 mm, insbesondere von 0,3 mm bis 0,9 mm, beispielsweise 0,38 mm, 0,51 mm, 0,78 mm, 0,81 mm oder 0,86 mm. Solche thermoplastischen Folien sind kommerziell erhältlich.

In einer anderen Ausführungsform der Erfindung ist der Radarsensor in der thermoplastischen Zwischenschicht eingebettet. Unter dem Begriff "eingebettet" wird erfindungsgemäß verstanden, dass das Material der Zwischenschicht den Radarsensor von allen Seiten und Flächen umgibt. Mit anderen Worten ist in dieser Ausführungsform der Radarsensor sandwichartig auch von thermoplastischem Material der Zwischenschicht umgeben. Hierdurch kann der Radarsensor zum einen vor Umwelteinflüssen, wie zum Beispiel Feuchtigkeit, aber auch vor Erschütterungen geschützt werden. Des Weiteren wird der Radarsensor in dieser Ausführungsform über das Material der Zwischenschicht auch mit der Innen- und der Außenscheibe verbunden und sicher fixiert. Auch das optische Erscheinungsbild der Verbundscheibe kann durch diese Ausgestaltung gegebenenfalls noch verbessert werden.

In einer weiteren Ausführungsform ist vorgesehen, dass der Radarsensor in der erfindungsgemäßen Verbundscheibe optisch durch einen Schwarz- oder Weißdruck und/oder durch Aufkleber auf der Außenscheibe und/oder auf der Innenscheibe maskiert ist. Die Maskierung kann dabei auf der außenseitigen Oberfläche der Außenscheibe I, auf der innenseitigen Oberfläche der Außenscheibe II, der innenseitigen Oberfläche der Innenscheibe III und/oder auf der außenseitigen Oberfläche der Innenscheibe IV aufgebracht sein. Hierdurch kann das optische Erscheinungsbild der Verbundscheibe verbessert werden. Die Maskierung kann hierbei in gleicher Weise erfolgen, beziehungsweise realisiert werden, wie dies zum Beispiel beim Vorsehen einer üblichen Randabdeckung durch einen schwarzen oder weißen Aufdruck, der die aus der Verbundscheibe herausgeführten Anschlussleitungen verdeckt, üblich ist. Die Maskierung kann beispielsweise durch einen Siebdruck auf die Innenscheibe und/oder die Außenscheibe aufgebracht werden. Die Funktion des Radarsensors wird durch eine solche Maskierung vorteilhafterweise nicht beeinträchtigt oder beeinflusst.

Gemäß einer anderen Ausführungsform der Erfindung ist der Radarsensor zur Aufnahme von Radardaten mit einer Frequenzbandbreite von wenigstens 2 GHz; beispielsweise von 4, 6, 8 oder 10 GHz, und/oder einem Frequenzband von 76 bis 150 GHz betreibbar. Beispielsweise kann der Radarsensor in einem Frequenzband von 76 bis 140 GHz, 76 bis 120 GHz betreibbar sein. In einer beispielhaften Ausführungsform kann der Radarsensor über eine Frequenzbandbreite von 10 GHz um 140 GHz betreibbar sein.

In einer anderen Ausführungsform der erfindungsgemäßen Verbundscheibe weist der Radarsensor einen Erfassungsbereich von 30 cm bis 10 m auf. Die erfindungsgemäß vorgesehene geringe Reichweite, die den Fahrzeuginnenraum umfassen soll, ermöglicht, dass die Sendeleistung und auch die Baugröße der Radarsensoren und von Antennen ebenfalls gering gehalten werden kann. Dies erleichtert zum einen die Integration des Radarsensors in die erfindungsgemäße Verbundscheibe und zum anderen ermöglicht es auch einen energieeffizienten Betrieb der Radarsensoren.

In einer weiteren Ausführungsform der erfindungsgemäßen Verbundscheibe weist der Radarsensor eine Dicke von weniger als 1 mm, besonders bevorzugt von weniger als 0,5 mm auf. Mit Dicke ist mit anderen Worten die Höhe des Radarsensors gemeint. Zweckmäßigerweise ist die Höhe des Radarsensors so gewählt, dass dieser sich problemlos in die Zwischenschicht der Verbundglasscheibe integrieren lässt. Beispielsweise könnten die Abmessungen des Radarsensors 5 cm x 5 cm x 0.75 mm (Länge x Breite x Dicke) betragen. Die Baugröße hinsichtlich der Sensorfläche, also der Länge und der Breite des eingesetzten Radarsensors ist grundsätzlich nicht kritisch, wobei jedoch immer, schon rein aus ästhetischen Gründen, eine Miniaturisierung angestrebt wird. Die Integration der Radarsensoren in die Verbundscheibe kann durch die bereits möglichen kleinen Abmessungen schon erhältlicher Radarsensoren und Radarsensorsysteme problemlos gelingen. Vorteilhafterweise können die Radarsignale Glas und Kunststoffe durchdringen und sind unempfindlich gegenüber Vibrationen.

In einer anderen Ausführungsform weist der Radarsensor einen Halbleiterchip auf, der wenigstens einen Radartransceiver realisiert. Beispiele für solche Radarsensoren sind in FMCW-Radartechnik ausgeführte Single-Chip-Systeme, beispielsweise 77GHz oder 140 GHz Single-Chip-Radarsensoren. Mit solchen Radarsensoren ist es besonders gut möglich nicht nur große Bewegungen, wie Gesten, sondern auch Vitalfunktionen, wie Herzschlag oder Atmung von Personen sowie deren Präsenz im Fahrzeug-Innenraum zu erfassen und die Abmessungen solcher Sensorsysteme sind vorteilhafterweise besonders kompakt und klein gebaut, was die Integration in die Zwischenschicht einer Verbundscheibe noch erleichtert.

Der Halbleiterchip, kann erfindungsgemäß zusätzlich eine digitale Signalverarbeitungskomponente und/ oder eine Steuereinheit des Radarsensors realisieren. Alternativ oder zusätzlich hierzu können der Halbleiterchip und eine Antennenanordnung des Radarsensors als ein Package realisiert und in der Zwischenschicht integriert sein. Vorteilhafterweise sind bereits sehr kompakte CMOS-Radarsensoren auf Halbleiterchips, sogenannte Radar-on-Chip-Systeme mit On-Chip Speichern, Signalverarbeitungskomponenten, Mikrocontrollern, zur Verarbeitung der Radarsignale, und / oder integrierten Antennen verfügbar, die besonders kleinbauend sind und für die erfindungsgemäße Kurzreichweitenanwendung im Fahrzeuginnenraum besonders geeignet sind. Die zusätzliche Integration der Antennen sorgt für kurze Signalwege und ein geringeres Signal zu RauschVerhältnis und ist für hohe Frequenzen und größere und variable Frequenzbandbreiten geeignet.

In einer anderen Ausführungsform ist der Radarsensor und/oder die Auswerteeinheit mit der Bordelektronik und/oder einem Warnsystem des Fahrzeugs oder einer externen Ausgabeeinrichtung zur Ausgabe eines Warnsignals verbunden. So kann zum Beispiel bei Detektieren der Anwesenheit eines Kindes in einem ansonsten unbesetzten Fahrzeug durch eine Alarmanlage des Fahrzeugs ein akustisches und/oder optisches Signal ausgegeben werden. Eine andere oder zusätzliche Möglichkeit wäre die Kopplung an ein automatisches Notrufsystem eCall. So wird ein rechtzeitiges Eingreifen sichergestellt.

In einer weiteren Ausführungsform ist vorgesehen, dass die Verbundscheibe, insbesondere die Zwischenschicht, mindestens einen weiteren Sensor, beispielsweise ein oder mehrere Radarsensoren, und/oder mindestens ein weiteres Funktionselement umfasst. Hierdurch können zum einen weitere Funktionen, wie zum Beispiel Einbruchsschutz, Fahrzeugüberwachung oder Fahrassistenz ermöglicht werden. Zusätzlich können beispielsweise eine oder mehrere Kameras oder andere Sensoren mit weiteren Funktionen in die Verbundscheibe integriert werden. Insbesondere können aber auch weitere Sensoren oder Funktionselemente vorgesehen werden, die zusätzlich die Sicherheitsfunktion des Radarsensors unterstützen und/oder gegebenenfalls mit diesem funktionell verbunden sind oder mit diesem zusammenwirken. Dies kann zum Beispiel durch ein oder mehrere zusätzliche Radarsensoren erfolgen, die zum Beispiel über ein CAN-Bus System miteinander verbunden und in einem solchen CAN-Netzwerk gleichzeitig betrieben werden. Die Radardaten der verschiedenen Sensoren können dann zusammen verarbeitet und ausgewertet werden, was die Genauigkeit und Zuverlässigkeit der resultierenden Messdaten noch erhöht.

Weiterhin betrifft die Erfindung ein Verfahren zur Herstellung einer Verbundscheibe wie vorstehend beschrieben, umfassend die Schritte
- Bereitstellen einer Stapelfolge aus einer Außenscheibe, einer Innenscheibe und mindestens einer dazwischen angeordneten thermoplastischen Folie zur Ausbildung der thermoplastischen Zwischenschicht, wobei mindestens eine thermoplastische Folie mindestens einen Radarsensor umfasst oder zwischen der thermoplastischen Folie und der Außenscheibe und/oder der Innenscheibe ein Radarsensor angeordnet wird,
- Laminieren der Stapelfolge zu einer Verbundscheibe.

Mit anderen Worten können erfindungsgemäß eine Außenscheibe, eine Innenscheibe und die mindestens eine dazwischen angeordnete thermoplastische Folie, sowie der mindestens eine Radarsensor, als Stapel angeordnet werden. Der Radarsensor kann flächig an die Außenscheibe und/oder die Innenscheibe angrenzen. Die beiden Scheiben und die dazwischen angeordnete Folie werden natürlich flächig und im Wesentlichen kongruent übereinander angeordnet. Der Radarsensor wird zweckmäßigerweise so innerhalb der Scheibenflächen positioniert, dass er in der resultierenden Verbundscheibe im eingebauten Zustand den gewünschten Erfassungsbereich aufweist. Bevorzugt wird der Radarsensor vor dem Laminieren, beispielsweise mit einem Flachleiter, gegebenenfalls mit allen gewünschten elektrischen oder elektronischen Anschlüssen versehen. Diese Anschlüsse und Leitungen können auf bekannte und übliche Weise erzeugt und bereitgestellt werden.

Das Laminieren und damit das Verbinden gebildeten Schichtfolge zur Verbundscheibe erfolgt bevorzugt unter Einwirkung von Hitze, Vakuum und/oder Druck. Es können an sich bekannte Verfahren zur Herstellung einer Verbundscheibe verwendet werden. Beim Laminieren fließt das erhitzte, fließfähige thermoplastische Material in die Räume und um den Radarsensor herum, so dass ein stabiler Verbund hergestellt wird und der Radarsensor in die Zwischenschicht eingekapselt und in der Zwischenschicht befestigt wird.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80°C bis 110 °C. Die Außenscheibe, die thermoplastische Zwischenschicht und die Innenscheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Scheiben innerhalb von beispielsweise etwa 60 Minuten bei verminderten Drücken von 0,01 mbar bis 800 mbar und Temperaturen von 80°C bis 170°C laminiert werden.

In einer Ausgestaltung des Verfahrens kann der Radarsensor in eine Ausnehmung in mindestens einer thermoplastischen Folie der thermoplastischen Zwischenschicht formschlüssig eingesetzt sein. Die thermoplastische Schicht kann durch eine zusammenhängende thermoplastische Folie gebildet werden, in welche Ausnehmungen beispielsweise durch Ausschneiden oder Stanzen eingebracht sind beziehungsweise werden, in die der Radarsensor eingesetzt oder eingelegt werden kann. Die thermoplastische Schicht ist mit anderen Worten dann rahmenartig um den Radarsensor ausgebildet. Alternativ kann die thermoplastische Folie einer Schicht auch aus mehreren Folienabschnitten um den Radarsensor zusammengesetzt angeordnet werden. Die so zusammenhängend oder aus Teilabschnitten gebildete thermoplastische Schicht ist in ihrer Dicke der Höhe (Dicke) des Radarsensors vorzugsweise ungefähr angepasst. Optische Verzerrungen oder ein Glasbruch beim Verbinden können durch die so bewerkstelligte Kompensation der Dicke weitestgehend vermieden werden.

Gleichermaßen ist es auch möglich, dass die Zwischenschicht aus mehreren übereinander angeordneten thermoplastischen Folien und /oder Folienabschnitten gebildet wird und die Ausnehmung zur Aufnahme des Radarsensors in zwei oder mehr, einander benachbarten, direkt aufeinander liegenden Folienschichten vorgesehen werden. Ausnehmungen können erfindungsgemäß durch die thermoplastische Schicht durchgehende Löcher oder Vertiefungen innerhalb einer oder mehreren Folien sein. Beim Laminieren verbinden sich die so aufeinander angeordneten thermoplastischen Schichten miteinander und bilden die Zwischenschicht aus. Die Folienschichten und/oder Folienabschnitte können dabei aus gleichen oder aus unterschiedlichen Materialien, wie zum Beispiel PVB ausgebildet sein. Es kann daher sein, dass die unterschiedlichen thermoplastischen Folien und/oder Folienabschnitte einheitlich miteinander verschmelzen und in der resultierenden Verbundscheibe nicht mehr voneinander zu unterscheiden sind.

Die Ausnehmungen in der mindestens einen thermoplastischen Folie oder im Folienstapel mehrerer thermoplastischer Folien sind in Größe, Position und Anordnung auf den mindestens einen Radarsensor abgestimmt. Das bedeutet, dass die Abmessungen der Ausnehmungen im Wesentlichen den Abmessungen des Radarsensors entspricht oder leicht größer sind, insbesondere höchstens 150 %, bevorzugt höchstens 120 % der Abmessungen des Radarsensors betragen. Die Position der Ausnehmung entspricht der gewünschten Positionierung des Radarsensors in der zu fertigenden Verbundscheibe. Durch die zugeordnete Ausnehmung ist der Radarsensor zusätzlich während der Herstellung in der thermoplastischen Folie oder den thermoplastischen Folien zur Ausbildung der Zwischenschicht fixiert. Ein zusätzliches Befestigen zur sicheren und passgenauen Positionierung während der Herstellung ist nicht erforderlich.

Die Position der Radarsensoren kann für die Produktion festgelegt werden, was für die Massenfertigung vorteilhaft ist. Ausnehmungen in den thermoplastischen Folien können vor dem Laminieren erzeugt werden. Folien mit den definierten Ausnehmungen können vorteilhafterweise in großer Stückzahl vorbereitet werden oder sogar direkt vom Folienzulieferer passend angefordert und bezogen werden.

Durch das Vorsehen einer passenden Ausnehmung zur Aufnahme des Radarsensors in einer oder mehreren aufeinander liegenden thermoplastischen Folien wird vorteilhafterweise der sonst entstehende Höhenunterschied ausgeglichen und sorgt so für eine verspannungsarme und von optischen Verzerrungen freie Verbindung in der resultierenden Verbundscheibe. Die Dicke der thermoplastischen Schicht kann auf den jeweils eingesetzten Radarsensor abgestimmt werden, um beispielsweise Glasbruch, oder Stress in den eingesetzten Außen- und Innenscheiben durch einen lokalen Dickenunterschied zu vermeiden und auch eine optisch einwandfreie Verbindung herzustellen.

In einer anderen Ausgestaltung des Verfahrens zur Herstellung einer Verbundscheibe kann der Radarsensor, beispielsweise über ein CAN-Bus-Netzwerk mit weiteren Sensoren und/oder der Bordelektronik verbunden werden.

Ferner erstreckt sich die Erfindung auf die Verwendung der erfindungsgemäßen Verbundscheibe in Fortbewegungsmitteln für den Verkehr auf dem Lande, in der Luft oder zu Wasser, insbesondere als Verbundscheibe in Kraftfahrzeugen, insbesondere als Dachscheibe oder Windschutzscheibe.

Die verschiedenen Ausgestaltungen der Erfindung können einzeln oder in beliebigen Kombinationen realisiert sein. Insbesondere sind die vorstehend genannten und nachstehend zu erläuternden Merkmalen nicht nur in den angegebenen Kombinationen, sondern auch in anderen Kombinationen oder in Alleinstellung einsetzbar, ohne den Rahmen der Erfindung zu verlassen, es sei denn, Ausführungsbeispiele und/oder ihre Merkmale sind explizit nur als Alternativen genannt oder schließen sich aus.

Nachfolgend wird die Erfindung eingehender unter Bezugnahme auf die Figuren dargestellt. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden, soweit nicht explizit als reine Alternative dargestellt.

Die Zeichnungen sind vereinfachte, schematische Darstellungen und nicht maßstabsgetreu. Die Zeichnungen schränken die Erfindung in keiner Weise ein.

Es zeigen
- Figur 1: eine Draufsicht auf eine Ausgestaltung der erfindungsgemäßen Verbundscheibe am Beispiel einer Dachscheibe eines Fahrzeugs,
- Figur 2: eine Draufsicht auf die in ein Fahrzeug eingebaute Dachscheibe aus Figur 1;
- Figur 3: eine Querschnittsansicht der Verbundscheibe entlang der Schnittlinie X-X' aus Figur 1,
- Figur 4: ein Flussdiagramm einer Ausführungsform des erfindungsgemäßen Verfahrens.

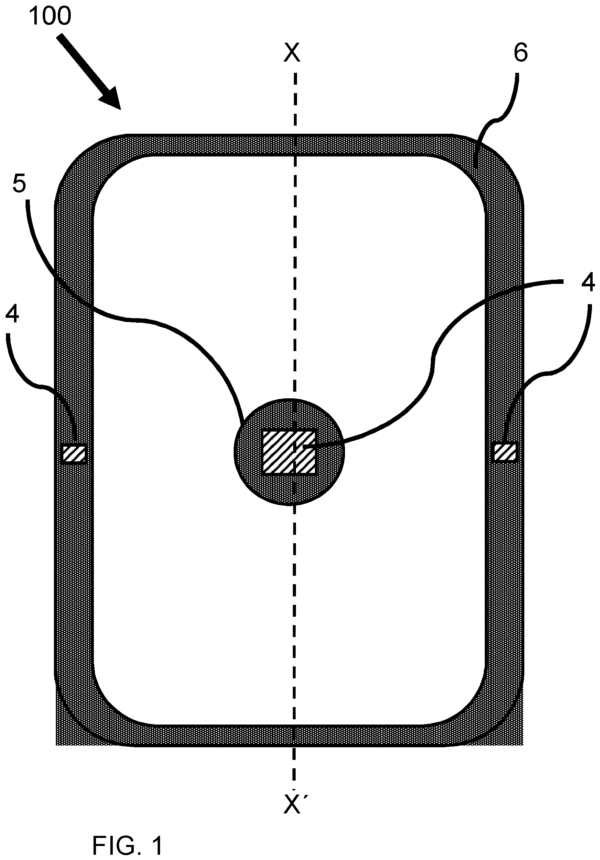

Figur 1 zeigt eine Draufsicht auf eine Ausgestaltung der erfindungsgemäßen Verbundscheibe 100 am Beispiel einer Dachscheibe für ein Fahrzeug. Zweckmäßigerweise ist ein Radarsensor 4 in ungefähr zentraler Position der Dachscheibe 100 angeordnet, so dass dieser einen möglichst großen Erfassungsbereich zur Aufnahme von Radardaten aufweist. Der bzw. die in der Verbundscheibe 100 angeordneten Radarsensoren 4 strahlen Radarstrahlen in den Fahrzeuginnenraum und nehmen reflektierte Radarstrahlen auf. Elektrische und elektronische Verbindungen der Sensoren sind nicht dargestellt. Der Radarsensor 4 ist erfindungsgemäß mit einer Auswerteeinheit (nicht gezeigt) zur Ermittlung von Bewegung und/oder Präsenz von Personen oder Tieren im Fahrzeuginnenraum verbunden. Zum Beispiel können mehrere Radarsensoren 4 über ein CAN-BusSystem miteinander verbunden und in einem solchen CAN-Netzwerk gleichzeitig betrieben werden. Die Radardaten der verschiedenen Sensoren können dann zusammen verarbeitet und ausgewertet werden, was die Genauigkeit und Zuverlässigkeit der resultierenden Messdaten und die Sicherheitsfunktion noch erhöht. Der Radarsensor 4 ist in der dargestellten Ausführungsform zum Fahrzeuginnenraum hin durch eine Maskierung 5 optisch verdeckt. Die Maskierung 5 kann beispielsweise ein Schwarzdruck sein, der im Herstellungsprozess beispielsweise gleichzeitig mit dem üblichen Abdeckdruck 6 am umlaufenden Rand aufgebracht werden kann. Die Aufbringung eines Abdeckdrucks 6 ist mittlerweile üblich und dient vorwiegend dazu, Anschlüsse und Verbindungen in und an der Verbundscheibe 100 zu verdecken. Ein Schwarzdruck zur Realisierung der Maskierung 5 des Radarsensors und des Abdeckdrucks 6 kann beispielsweise mittels Siebdruckes auf der innenseitigen Oberfläche der Innenscheibe III oder auf die außenseitige Oberfläche IV der Innenscheibe 2 aufgebracht sein. Die Maskierung 5 kann alternativ durch Anordnung eines oder mehrerer Aufkleber erfolgen. Der ästhetische Eindruck wird durch die Maskierung 5 und auch durch den Abdeckdruck 6 deutlich erhöht. In der dargestellten Ausführungsform sind zwei weitere Radarsensoren 4 im Bereich des Abdeckdrucks 6 am umlaufenden Rand der Verbundscheibe 100 angeordnet. Dieser verdeckt die randseitig angeordneten Radarsensoren 4 bereits, so dass keine zusätzliche Maskierung 5 angebracht werden muss, um einen optisch guten Eindruck der Verbundscheibe zu erhalten. Eine weitere Maskierung 5 des Radarsensors 4 könnte zusätzlich oder alternativ auch zur Außenseite gerichtet auf der Außenscheibe 1 in gleicher Weise realisiert werden.

In einer Ausführungsform ist der Radarsensor 4 und/oder die Auswerteeinheit mit der Bordelektronik und/oder einem Warnsystem des Fahrzeugs oder einer externen Ausgabeeinrichtung zur Ausgabe eines Warnsignals verbunden. So kann zum Beispiel bei Detektieren der Anwesenheit eines Kindes durch den Radarsensor 4 in einem ansonsten unbesetzten Fahrzeug durch eine Alarmanlage des Fahrzeugs ein akustisches und/oder optisches Signal ausgegeben werden. Eine andere oder zusätzliche Möglichkeit wäre die Kopplung an ein automatisches Notrufsystem eCall. So kann ein rechtzeitiges Eingreifen sichergestellt werden.

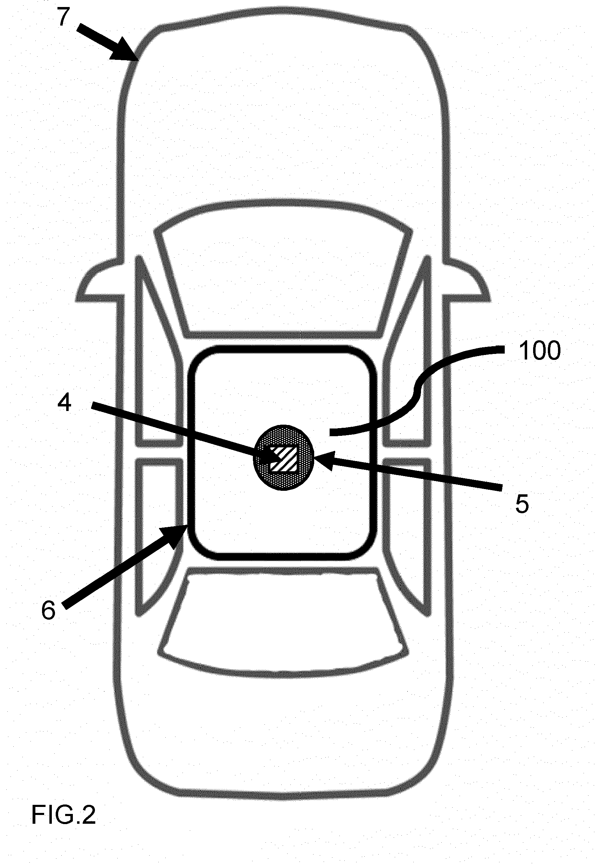

Figur 2 zeigt eine Draufsicht auf eine in ein Fahrzeug (PKW) 7 eingebaute erfindungsgemäße Verbundscheibe 100 als Dachscheibe aus Figur 1. Die Beschreibung der Verbundscheibe entspricht der aus Figur 1. Die Radarsensoren 4 im Bereich des Abdeckdrucks 6 am umlaufenden Rand der Verbundscheibe 100 sind nicht dargestellt.

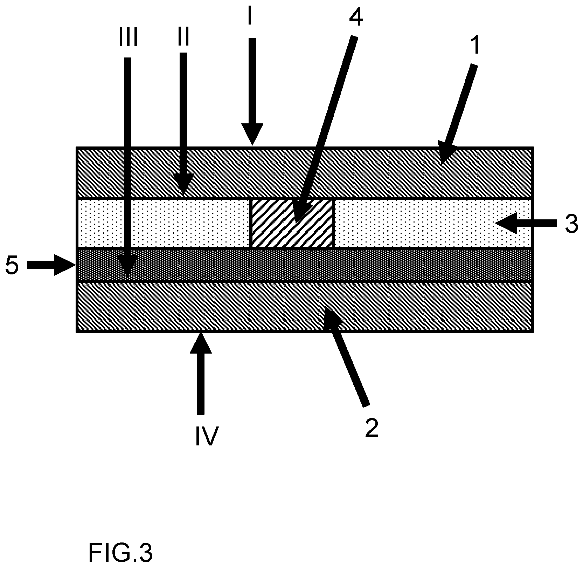

Figur 3 zeigt eine Querschnittsansicht der Verbundscheibe 100 entlang der Schnittlinie X-X' aus Figur 1. Die gezeigte Ausführungsform zeigt eine Verbundscheibe 100 mit einer Außenscheibe 1 und einer Innenscheibe 2 und einer dazwischen angeordneten thermoplastischen Zwischenschicht 3, in der ein Radarsensor 4 integriert ist. Der Radarsensor 4 ist in einer Ausnehmung der Zwischenschicht 3 angeordnet und grenzt flächig an die innenseitige Oberfläche II der Außenscheibe 1. Der Radarsensor ist somit in der Zwischenschicht 3 eingekapselt und vor Umwelteinflüssen geschützt. Die ausgebildete Dicke der Zwischenschicht 3 ist auf die Höhe (Dicke) des eingesetzten Radarsensors 4 angepasst. Optische Verzerrungen oder ein Glasbruch beim Laminieren zur Verbundscheibe 100 kann durch die so bewerkstelligte Kompensation der Dicke weitestgehend vermieden werden. Auf der innenseitigen Oberfläche III der Innenscheibe 2 ist eine Maskierung 5 angeordnet, die den Radarsensor 4 zum Fahrzeuginnenraum hin verdeckt. Dies ermöglicht ein optisch ansprechendes Erscheinungsbild der Verbundscheibe 100. Der Radarsensor 4 weist bevorzugt eine Dicke von weniger als 1 mm, besonders bevorzugt von weniger als 0,5 mm auf. Beispielsweise könnten die Abmessungen des Radarsensors 3 cm x 3 cm x 0,5 mm (Länge x Breite x Dicke) betragen. Die Baugröße hinsichtlich der Sensorfläche, also der Länge und der Breite des eingesetzten Radarsensors ist grundsätzlich nicht kritisch, wobei jedoch immer, schon rein aus ästhetischen Gründen, eine Miniaturisierung angestrebt wird.

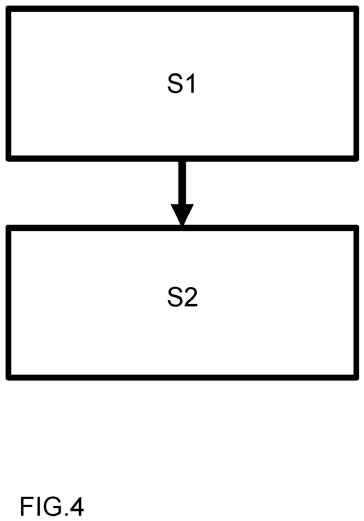

Figur 4 zeigt ein Flussdiagramm einer Ausführungsform des erfindungsgemäßen Verfahrens. Die Herstellung einer Verbundscheibe 100 wie vorstehend beschrieben, umfasst die Schritte
S1: Bereitstellen einer Stapelfolge aus einer Außenscheibe 1, einer Innenscheibe 2 und mindestens einer dazwischen angeordneten thermoplastischen Folie zur Ausbildung der thermoplastischen Zwischenschicht 3, wobei mindestens eine thermoplastische Folie mindestens einen Radarsensor 4 umfasst oder zwischen der thermoplastischen Folie und der Außenscheibe 1 und/oder der Innenscheibe 2 ein Radarsensor 4 angeordnet wird,
S2: Laminieren der Stapelfolge zu einer Verbundscheibe 100.

Mit anderen Worten können erfindungsgemäß in einem ersten Verfahrensschritt S1 eine Außenscheibe 1, eine Innenscheibe 2 und die mindestens eine dazwischen angeordnete thermoplastische Folie zur Ausbildung der Zwischenschicht 3, sowie der mindestens eine Radarsensor 4 als Stapel angeordnet und bereitgestellt werden. Der Radarsensor 4 kann flächig an die Außenscheibe 1 und/oder die Innenscheibe 2 angrenzen. Die beiden Scheiben 1 und 2 und die mindestens eine dazwischen angeordnete thermoplastische Folie werden natürlich flächig und im Wesentlichen kongruent übereinander angeordnet. Der Radarsensor 4 wird zweckmäßigerweise so innerhalb der Scheibenflächen positioniert, dass er in der resultierenden Verbundscheibe 100 im eingebauten Zustand den gewünschten Erfassungsbereich zur Aufnahme der Radardaten aufweist. Die erfindungsgemäßen Radarsensoren 4 strahlen Radarstrahlen in den Fahrzeuginnenraum und nehmen reflektierte Radarstrahlen auf. Der Radarsensor 4 wird erfindungsgemäß mit einer Auswerteeinheit (nicht gezeigt) zur Ermittlung von Bewegung und/oder Präsenz von Personen oder Tieren im Fahrzeuginnenraum verbunden. Bevorzugt wird der Radarsensor 4 vor dem Laminieren in Schritt 2, beispielsweise mit einem Flachleiter gegebenenfalls mit allen gewünschten elektrischen oder elektronischen Anschlüssen und Kontaktierungen, beispielsweise zur Verbindung des Radarsensors 4 mit der Auswerteeinheit und/oder der Bordelektronik versehen. Die Auswerteeinheit kann beispielsweise auch in der Bordelektronik integriert sein. Solche Anschlüsse, Kontaktierungen und Leitungen können auf bekannte und übliche Weise erzeugt und bereitgestellt werden, die nicht näher erläutert werden müssen.

Das Laminieren und damit das Verbinden der gebildeten Schichtfolge zur Verbundscheibe erfolgt bevorzugt unter Einwirkung von Hitze, Vakuum und/oder Druck. Es können an sich bekannte Verfahren zur Herstellung einer Verbundscheibe verwendet werden. Beim Laminieren fließt das erhitzte, fließfähige thermoplastische Material in die Räume und um den Radarsensor herum, so dass ein stabiler Verbund hergestellt wird und der Radarsensor in die Zwischenschicht eingekapselt und in der Zwischenschicht befestigt wird.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80 °C bis 110 °C. Die Außenscheibe, die thermoplastische Zwischenschicht und die Innenscheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Scheiben innerhalb von beispielsweise etwa 60 Minuten bei verminderten Drücken von 0,01 mbar bis 800 mbar und Temperaturen von 80°C bis 170°C laminiert werden.

Erfindungsgemäß wird eine Verbundscheibe zur Verfügung gestellt, mit der die Sicherheit für Insassen in einem Fahrzeug weiter erhöht werden kann. Insbesondere kann auch bei für andere optische Systeme ungünstigen Umwelteinflüssen, wie beispielsweise Dunkelheit oder großer Hitze und intensiver Sonneneinstrahlung, eine zuverlässige Messung und Auswertung von Daten über Bewegung und/oder Präsenz von Personen oder Tieren durch die erfindungsgemäße Lösung mit dem integrierten Radarsensor in einem Fahrzeuginnenraum bereitgestellt werden. Beispielsweise können somit zurückgelassene Kinder oder Tiere in einem ansonsten verlassenen Fahrzeug erkannt und ein rechtzeitiges Eingreifen ermöglicht werden. Weiterhin kann auch die Fahrerüberwachung weiter verbessert und zuverlässig bereitgestellt werden.

Die Herstellung einer erfindungsgemäßen Verbundscheibe mit integriertem Radarsensor kann einfach und kostengünstig erfolgen und ist auch für eine Serienfertigung geeignet.

### Bezugszeichenliste

- 100: Verbundscheibe
- 1: Außenscheibe
- 2: Innenscheibe
- 3: Zwischenschicht
- 4: Radarsensor
- 5: Maskierung
- 6: Abdeckdruck
- 7: Fahrzeug
- I: außenseitige Oberfläche der Außenscheibe
- II: innenseitige Oberfläche der Außenscheibe
- III: innenseitige Oberfläche der Innenscheibe
- IV: außenseitige Oberfläche der Innenscheibe

## Patentansprüche

1. Verbundscheibe für ein Fahrzeug (100), welche zur Abtrennung eines Fahrzeuginnenraums für Insassen von einer äußeren Umgebung vorgesehen ist, mit einer Außenscheibe (1) und einer Innenscheibe (2), die über eine thermoplastische Zwischenschicht (3) miteinander verbunden sind, wobei in der thermoplastischen Zwischenschicht (3) mindestens ein Radarsensor (4) integriert und derart ausgebildet und angeordnet ist, dass der Radarsensor (4) Radarstrahlen in den Fahrzeuginnenraum strahlt und reflektierte Radarstrahlen aufnimmt, wobei der Radarsensor mit einer Auswerteeinheit zur Ermittlung von Bewegung und/oder Präsenz von Personen oder Tieren im Fahrzeuginnenraum verbunden ist.

2. Verbundscheibe (100) nach Anspruch 1, bei welcher die thermoplastische Zwischenschicht (3) aus einer oder mehreren thermoplastischen Folien ausgebildet ist und die thermoplastische Zwischenschicht (3) Polyvinylbutyral (PVB), Ethylenvinylacetat (EVA), und/oder Polyurethan enthält oder hieraus besteht.

3. Verbundscheibe (100) nach einem der Ansprüche 1 oder 2, bei welcher der Radarsensor (4) in der thermoplastischen Zwischenschicht (3) eingebettet ist.

4. Verbundscheibe (100) nach einem der Ansprüche 1 bis 3, bei welcher der Radarsensor optisch durch einen Schwarz- oder Weißdruck auf der Außenscheibe (1) und/oder auf der Innenscheibe (2) maskiert ist.

5. Verbundscheibe (100) nach einem der Ansprüche 1 bis 4, bei welcher der Radarsensor (4) zur Aufnahme von Radardaten mit einer Frequenzbandbreite von wenigstens 2 GHz und/oder einem Frequenzband von 76 bis 150 GHz betreibbar ist.

6. Verbundscheibe (100) nach einem der Ansprüche 1 bis 5, bei welcher der Radarsensor (4) einen Erfassungsbereich von 30 cm bis 10 m aufweist.

7. Verbundscheibe (100) nach einem der Ansprüche 1 bis 6, bei welcher der Radarsensor (4) eine Dicke von weniger als 1 mm aufweist.

8. Verbundscheibe (100) nach einem der Ansprüche 1 bis 7, bei welcher der Radarsensor (4) einen Halbleiterchip aufweist, der wenigstens einen Radartransceiver realisiert.

9. Verbundscheibe (100) nach Anspruch 8, bei welcher der Halbleiterchip zusätzlich eine digitale Signalverarbeitungskomponente und/ oder eine Steuereinheit des Radarsensors (4) realisiert und/oder der Halbleiterchip und eine Antennenanordnung des Radarsensors als ein Package realisiert und in der Zwischenschicht (3) integriert sind.

10. Verbundscheibe (100) nach einem der Ansprüche 1 bis 9, bei welcher der Radarsensor (4) und/oder die Auswerteeinheit mit einer Bordelektronik und/oder einem Warnsystem des Fahrzeugs (100) oder einer externen Ausgabeeinrichtung zur Ausgabe eines Warnhinweises verbunden ist.

11. Verbundscheibe (100) nach einem der Ansprüche 1 bis 10, wobei die Verbundscheibe (100), insbesondere die Zwischenschicht (3), mindestens einen weiteren Sensor und/oder mindestens ein weiteres Funktionselement umfasst.

12. Verfahren zur Herstellung einer Verbundscheibe (100) nach einem der Ansprüche 1 bis 10, umfassend die Schritte
- Bereitstellen einer Stapelfolge aus einer Außenscheibe (1), einer Innenscheibe (2) und mindestens einer dazwischen angeordneten thermoplastischen Folie zur Ausbildung der thermoplastischen Zwischenschicht (3), wobei mindestens eine thermoplastische Folie mindestens einen Radarsensor (4) umfasst oder zwischen der thermoplastischen Folie und der Außenscheibe (1) und/oder der Innenscheibe (2) ein Radarsensor (4) angeordnet wird,
- Laminieren der Stapelfolge zu der Verbundscheibe (100).

13. Verfahren zur Herstellung einer Verbundscheibe (100) nach Anspruch 12, bei welchem der Radarsensor (4) in eine Ausnehmung in mindestens einer thermoplastischen Folie der thermoplastischen Zwischenschicht (3) formschlüssig eingesetzt ist.

14. Verfahren zur Herstellung einer Verbundscheibe (100) nach Anspruch 12 oder 13, bei welchem der Radarsensor (4) über einen CAN Bus mit weiteren Sensoren und/oder der Bordelektronik verbunden wird.

15. Verwendung der Verbundscheibe nach einem der Ansprüche 1 bis 11 in Fahrzeugen für den Verkehr auf dem Lande, in der Luft oder zu Wasser, insbesondere für Kraftfahrzeuge, insbesondere als Dachscheibe oder Windschutzscheibe.

## Claims

1. Composite pane for a vehicle (100) which is provided for separation of a vehicle interior for occupants from an external environment, with an outer pane (1) and an inner pane (2) that are joined one another via a thermoplastic intermediate layer (3), wherein at least one radar sensor (4) is integrated into the thermoplastic intermediate layer (3) and is designed and arranged such that the radar sensor (4) emits radar beams into the vehicle interior and receives reflected radar beams, and the radar sensor is connected to an evaluation unit for determining movement and/or presence of persons or animals in the vehicle interior.

2. Composite pane (100) according to claim 1, in which the thermoplastic intermediate layer (3) is formed from one or a plurality of thermoplastic films and the thermoplastic intermediate layer (3) contains or is made of polyvinyl butyral (PVB), ethylene vinyl acetate (EVA), and/or polyurethane.

3. Composite pane (100) according to one of claims 1 or 2, in which the radar sensor (4) is embedded in the thermoplastic intermediate layer (3).

4. Composite pane (100) according to one of claims 1 through 3, in which the radar sensor is optically masked by a black print or a white print on the outer pane (1) and/or on the inner pane (2).

5. Composite pane (100) according to one of claims 1 through 4, in which the radar sensor (4) can be operated for receiving radar data with a frequency bandwidth of at least 2 GHz and/or a frequency band of 76 to 150 GHz.

6. Composite pane (100) according to one of claims 1 through 5, in which the radar sensor (4) has a detection range from 30 cm to 10 m.

7. Composite pane (100) according to one of claims 1 through 6, in which the radar sensor (4) has a thickness of less than 1 mm.

8. Composite pane (100) according to one of claims 1 through 7, in which the radar sensor (4) has a semiconductor chip that implements at least one radar transceiver.

9. Composite pane (100) according to claim 8, in which the semiconductor chip additionally implements a digital signal processing component and/or a control unit of the radar sensor (4), and/or the semiconductor chip and an antenna assembly of the radar sensor are implemented as a package and are integrated into the intermediate layer (3).

10. Composite pane (100) according to one of claims 1 through 9, in which the radar sensor (4) and/or the evaluation unit is connected to an onboard electronics and/or to a warning system of the vehicle (100) or to an external output device for outputting a warning.

11. Composite pane (100) according to one of claims 1 through 10, in which the composite pane (100), in particular the intermediate layer (3), includes at least one further sensor and/or at least one further functional element.

12. Method for producing a composite pane (100) according to one of claims 1 through 11, comprising the steps
- providing a stack sequence composed of an outer pane (1), an inner pane (2), and at least one thermoplastic film arranged therebetween for forming the thermoplastic intermediate layer (3), wherein at least one thermoplastic film includes at least one radar sensor or a radar sensor (4) is arranged between the thermoplastic film and the outer pane (1) and/or the inner pane (2).
- laminating the stack sequence to form the composite pane (100).

13. Method for producing a composite pane (100) according to claim 12, in which the radar sensor (4) is form-fittingly inserted into a cutout in at least one thermoplastic film of the thermoplastic intermediate layer (3).

14. Method for producing a composite pane (100) according to claim 12 or 13, in which the radar sensor (4) is connected to other sensors and/or to the onboard electronics via a CAN bus.

15. Use of the composite pane according to one of claims 1 through 11 in vehicles for traffic on land, in the air, or on water, in particular for motor vehicles, in particular as a roof panel or windshield.

## Revendications

1. Vitrage composite pour véhicule (100) destiné à séparer l'intérieur du véhicule des occupants d'un environnement extérieur, avec un vitre extérieur (1) et un vitre intérieur (2) reliés l'un à l'autre par une couche intermédiaire thermoplastique (3), dans lequel au moins un capteur radar (4) est intégré dans la couche intermédiaire thermoplastique (3) et est conçu et disposé de manière à ce que le capteur radar (4) émette des faisceaux radar dans l'intérieur du véhicule et reçoive des faisceaux radar réfléchis, et que le capteur radar soit connecté à une unité d'évaluation pour déterminer le mouvement et/ou la présence de personnes ou d'animaux dans l'intérieur du véhicule.

2. Vitrage composite (100) selon la revendication 1, dans lequel la couche intermédiaire thermoplastique (3) est formée d'un ou de plusieurs films thermoplastiques et la couche intermédiaire thermoplastique (3) contient ou est faite de butyral de polyvinyle (PVB), d'éthylène-acétate de vinyle (EVA), et/ou de polyuréthane.

3. Vitrage composite (100) selon l'une des revendications 1 ou 2, dans lequel le capteur radar (4) est intégré dans la couche intermédiaire thermoplastique (3).

4. Vitrage composite (100) selon l'une des revendications 1 à 3, dans laquelle le capteur radar est optiquement masqué par une impression noire ou blanche sur la vitre extérieure (1) et/ou sur la vitre intérieure (2).

5. Vitrage composite (100) selon l'une des revendications 1 à 4, dans laquelle le capteur radar (4) peut être utilisé pour recevoir des données radar avec une largeur de bande de fréquence d'au moins 2 GHz et/ou une bande de fréquence de 76 à 150 GHz.

6. Vitrage composite (100) selon l'une des revendications 1 à 5, dans laquelle le capteur radar (4) a une portée de détection de 30 cm à 10 m.

7. Vitrage composite (100) selon l'une des revendications 1 à 6, dans lequel le capteur radar (4) a une épaisseur inférieure à 1 mm.

8. Vitrage composite (100) selon l'une des revendications 1 à 7, dans laquelle le capteur radar (4) comporte une puce semi-conductrice qui met en oeuvre au moins un émetteur-récepteur radar.

9. Vitrage composite (100) selon la revendication 8, dans laquelle la puce semi-conductrice met également en oeuvre un composant de traitement des signaux numériques et/ou une unité de commande du capteur radar (4), et/ou la puce semi-conductrice et un ensemble d'antennes du capteur radar sont mis en oeuvre en tant que paquet et sont intégrés dans la couche intermédiaire (3).

10. Vitrage composite (100) selon l'une des revendications 1 à 9, dans lequel le capteur radar (4) et/ou l'unité d'évaluation est connecté à un système électronique embarqué et/ou à un système d'avertissement du véhicule (100) ou à un dispositif de sortie externe pour émettre un avertissement.

11. Vitrage composite (100) selon l'une des revendications 1 à 10, dans lequel le vitrage composite (100), en particulier la couche intermédiaire (3), comprend au moins un autre capteur et/ou au moins un autre élément fonctionnel.

12. Procédé de fabrication d'une vitrage composite (100) selon l'une des revendications 1 à 11, comprenant les étapes suivantes
- fournir une séquence d'empilage composée d'une vitre extérieure (1), d'une vitre intérieure (2) et d'au moins un film thermoplastique disposé entre elles pour former la couche intermédiaire thermoplastique (3), dans laquelle au moins un film thermoplastique comprend au moins un capteur radar ou un capteur radar (4) est disposé entre le film thermoplastique et la vitre extérieure (1) et/ou la vitre intérieure (2).
- laminage de la séquence d'empilage pour former le vitrage composite (100).

13. Procédé de fabrication d'une vitrage composite (100) selon la revendication 12, dans lequel le capteur radar (4) est inséré de manière ajustée dans une découpe d'au moins un film thermoplastique de la couche intermédiaire thermoplastique (3).

14. Procédé de fabrication d'une vitrage composite (100) selon la revendication 12 ou 13, dans lequel le capteur radar (4) est connecté à d'autres capteurs et/ou à l'électronique embarquée via un bus CAN.

15. Utilisation de la vitrage composite selon l'une des revendications 1 à 11 dans des véhicules pour la circulation sur terre, dans l'air ou sur l'eau, en particulier pour des véhicules automobiles, notamment en tant que panneau de toit ou pare-brise.
